# EUROPEAN PATENT APPLICATION

(11) **EP 4 811 307 A1**
(43) Date of publication of application: **23.09.2026**
(21) Application number: 26164471.0
(22) Date of filing: 12.03.2026
(51) Int. Cl.: G06V 10/98

(54) **SUPPORT APPARATUS, SUPPORT METHOD, AND SUPPORT PROGRAM**

(30) Priority: 19.03.2025 JP 2025045881
(71) Applicant: SCREEN Holdings Co., Ltd., Kyoto-shi, Kyoto 602-8585 (JP)
(72) Inventor: MASUHARA, Hirofumi, Kyoto, 602-8585 (JP); OKAYAMA, Toshiyuki, Kyoto, 602-8585 (JP); NOGUCHI, Takeshi, Kyoto, 602-8585 (JP); SHIMADA, Yoshinori, Kyoto, 602-8585 (JP)
(74) Representative: Kilian Kilian & Partner mbB

(57) **Abstract**

Data that is used for retraining of a trained model is appropriately selected. A support apparatus is an apparatus for supporting retraining of a trained model constructed in a false report filter that determines appropriateness of defect determination for an image which has been determined by a defect inspection apparatus to have a defect and that filters a false report, the support apparatus tagging correct answer information, correctness information, and category information to a defect data set in which a determination result from the false report filter is tagged to each of a plurality of sets of image data that have been determined to have a defect, and displaying the defect data set on a display.

## Description

### Technical Field

The present disclosure relates to a technique for inspecting a component on a substrate.

### Background Art

In manufacturing of a substrate, in order to confirm whether a wire, a semiconductor element, or the like (hereinafter referred to as a component) formed on a substrate has prescribed quality, the component is inspected for a defect. In a defect inspection, by using a defect inspection apparatus to acquire an image of a component formed on a substrate and carry out image processing with respect to the image, it is determined whether the component is defective.

Note here that there are the following cases: (i) a case where a component which has a defect is correctly determined by a defect inspection apparatus to have a defect; and (ii) a case where a component which has no defect is incorrectly determined by a defect inspection apparatus to have a defect. Incorrect determination that a component which has no defect has a defect, as in the latter case is referred to as a false report. There is also a case where, although a component actually has a defect, the component is not determined to have any defect, and it is determined that there is no defect. Such incorrect determination that there is no defect is referred to as defect overlooking.

As described above, determination accuracy of a defect inspection apparatus is not always perfect. Thus, in some cases, defect verification work (so-called verification work) is carried out in which an operator visually inspects a region on a substrate which region corresponds to an extracted image. Defect verification work determines whether each component has a true defect.

Defect verification work determines so-called correct answer information pertaining to whether each component has a true defect. Thus, in a defect inspection as described above, as disclosed in, for example, Patent Literatures 1 to 4, a result of classification into a true defect and a false report which result has been obtained by verification work carried out with respect to a substrate that has been assessed by a defect inspection apparatus to have a defect is accumulated as data, and a trained model that has been trained by machine learning on the basis of the accumulated data is used to carry out development for improving defect detection accuracy in the defect inspection apparatus and for achieving a reduction in person-hours of the verification work.

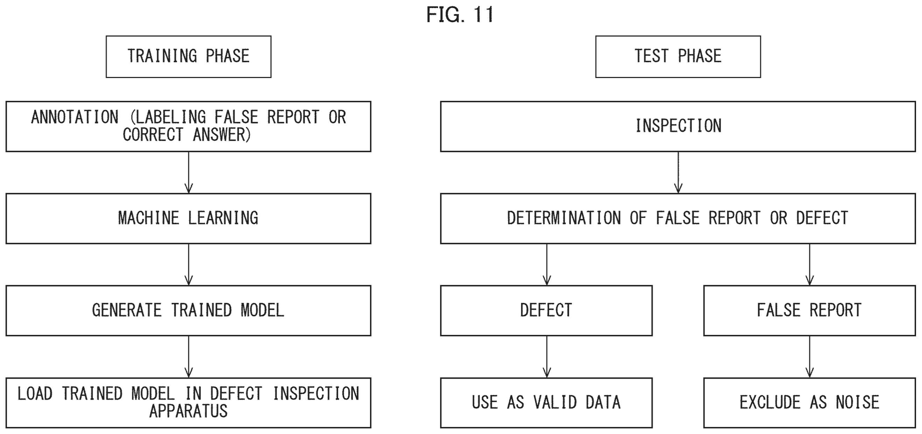

In techniques disclosed in Patent Literatures 1 to 4 and illustrated in Fig. 11, (1) a training phase and (2) a test phase are carried out. (1) In the training phase, by a worker determining whether a defect image prepared in advance is a false report or a defect (i.e., by annotation), training data in which one of a false report and a correct answer is labeled to the defect image is generated, and a trained model is generated by using the training data to carry out machine learning.

(2) In the test phase, an image detected as being defective in determination of a false report or a defect with use of the trained model generated in the training phase, i.e., an actual inspection is subjected to a distinction between whether the image is truly defective or false.

The image that has been assessed in the test phase to be truly defective is utilized as valid data also in subsequent inspections. The image that has been assessed in the test phase to be false is excluded as noise in order to improve inspection accuracy.

### Citation List

### [Patent Literature]

[Patent Literature 1]
   Japanese Patent Application Publication Tokukai No. 2024-132653
[Patent Literature 2]
   Japanese Patent Application Publication Tokukai No. 2023-141721
[Patent Literature 3]
   Japanese Patent Application Publication Tokukai No. 2023-122140
[Patent Literature 4]
   Japanese Patent No. 7317647

### Summary of Invention

### Technical Problem

In advancing development of techniques as described above, the inventors of the present application have found the following problem. That is, in a case where a trained model created in a training phase is used in a defect inspection apparatus to carry out a defect inspection in real time and there is any problem with a first appearance image or the trained model, there is the possibility that the defect inspection apparatus may overlook a true defect and determine that the first appearance image is false, or may excessively determine a false report as a defect. In consideration of such a possibility, the trained model needs to be retrained so as to be optimized.

However, since there is a large amount of data to be trained (data related to a result of classification into a true defect and a false report), it is necessary to appropriately select data to be retrained.

Thus, an aspect of the present disclosure has an object to appropriately select data that is used for retraining of a trained model.

### Solution to Problem

In order to attain the object, a support apparatus in accordance with an aspect of the present disclosure is a support apparatus for supporting retraining of a trained model constructed in a false report filter that determines appropriateness of defect determination for an image which has been determined by a defect inspection apparatus to have a defect and that filters a false report, the support apparatus including a display section, a memory, and a processor, in conjunction with the memory, the processor carrying out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

A support method in accordance with an aspect of the present disclosure is a support method for supporting retraining of a trained model constructed in a false report filter that determines appropriateness of defect determination for an image which has been determined by a defect inspection apparatus to have a defect and that filters a false report, the support method involving using a computer including a display section, a memory, and a processor to cause the processor, in conjunction with the memory, to carry out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

A support program in accordance with an aspect of the present disclosure is a support program for supporting retraining of a trained model constructed in a false report filter that determines appropriateness of defect determination for an image which has been determined by a defect inspection apparatus to have a defect and that filters a false report, wherein the support program being executed by a computer including a display section, a memory, and a processor causes the processor, in conjunction with the memory, to carry out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

### Advantageous Effects of Invention

An aspect of the present disclosure makes it possible to appropriately select data that is used for retraining of a trained model.

### Brief Description of Drawings

Fig. 1 is a view illustrating an example configuration of a defect inspection apparatus, a training apparatus, and a support apparatus in an embodiment of the present disclosure.
Fig. 2 is a view illustrating an example configuration of a computer that is included in the defect inspection apparatus illustrated in Fig. 1.
Fig. 3 is a block diagram illustrating an example configuration of a defect inspection apparatus, a training apparatus, a support apparatus, and a server in an embodiment of the present disclosure.
Fig. 4 is a flowchart illustrating an example process carried out by the support apparatus illustrated in Fig. 3.
Fig. 5 is an example structure diagram of a defect data set.
Fig. 6 is a view illustrating an example screen showing classification accuracy.
Fig. 7 is a view illustrating an example screen showing information pertaining to a first appearance image and an already given image.
Fig. 8 is a view illustrating an example image list displayed on a display.
Fig. 9 is a flowchart illustrating an example process in which the support apparatus illustrated in Fig. 3 extracts an additional training candidate with respect to image data that has been determined by a false report filter to be false.
Fig. 10 is a flowchart illustrating an example process in which the support apparatus illustrated in Fig. 3 extracts an additional training candidate with respect to image data that has been determined by a false report filter to have a defect.
Fig. 11 is a view illustrating a training phase and a test phase in a conventional technique.

### Description of Embodiments

### (Defect inspection apparatus)

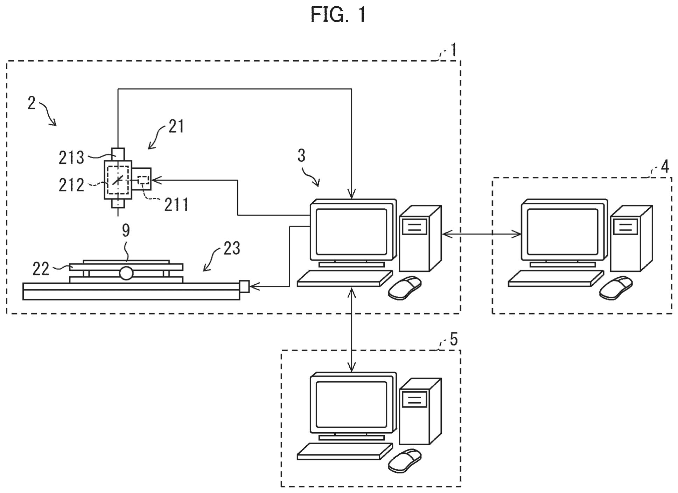

Fig. 1 is a view illustrating an example configuration of a defect inspection apparatus 1, a training apparatus 4, and a support apparatus 5 in an embodiment of the present disclosure. The defect inspection apparatus 1 is an apparatus that inspects, for a defect, a component such as a wire, a semiconductor element, or the like formed on a substrate 9. On a surface of the substrate 9, a pattern (e.g., a copper wiring pattern or electrode pattern) is formed. On the substrate 9, for example, a region in which copper plating is exposed, a region in which a copper wire is coated with solder resist serving as a protective film, and a region in which solder resist is directly disposed, and the like are present.

The defect inspection apparatus 1 includes an image acquisition apparatus 2 that captures an image of the substrate 9, and a computer 3. The computer 3 is a processing apparatus including an operation section. The computer 3 controls overall operation of the defect inspection apparatus 1. The image acquisition apparatus 2 includes an image capturing section 21, a stage 22 that holds the substrate 9, and a stage movement mechanism 23.

The image capturing section 21 captures an image of the substrate 9 and acquires the image. The image is, for example, a grayscale image of the entire region to be inspected on the substrate 9. The image acquired by the image capturing section 21 may be, for example, a multi-tone color image. The stage movement mechanism 23 moves the stage 22 relative to the image capturing section 21.

The image capturing section 21 includes an illumination section 211, an optical system 212, and an image capturing device 213. The optical system 212 guides, to the substrate 9, illumination light emitted from the illumination section 211, and guides, to the image capturing device 213, reflected light from the substrate 9. The image capturing device 213 converts, into an electric signal, an image of the substrate 9 which image has been formed by the optical system 212.

The illumination section 211 includes a lamp such as an LED or a bulb, and an optical element that adjusts light from the lamp, such as a lens or a reflection member. The optical system 212 includes an optical element such as a plurality of lenses or a one-way mirror. The image capturing device 213 is, for example, a two-dimensional imaging sensor. The image capturing device 213 may be a onedimensional imaging sensor. In this case, the image capturing section 21 captures an image of the substrate 9 while the stage movement mechanism 23 moves the stage 22.

The stage movement mechanism 23 is composed of, for example, a ball screw, a guide rail, a motor, and the like. Various mechanisms can be employed as the stage movement mechanism 23. For example, a linear motor is available. By the computer 3 controlling the stage movement mechanism 23 and the image capturing section 21, the stage 22 moves in a horizontal direction, and an image of a desired region on the substrate 9 is captured.

The stage 22 is a holding section that holds the substrate 9. The substrate 9 may be held by various methods. For example, a groove is formed in the stage 22, and suction is carried out through a suction port formed in the groove, so that the substrate 9 is sucked onto the stage 22. A large number of suction ports may be formed on the stage 22 to suck the substrate 9. The stage 22 may be formed of a porous material to carry out suction through the porous material. The stage 22 may use a mechanical mechanism to hold the substrate 9.

### (Computer)

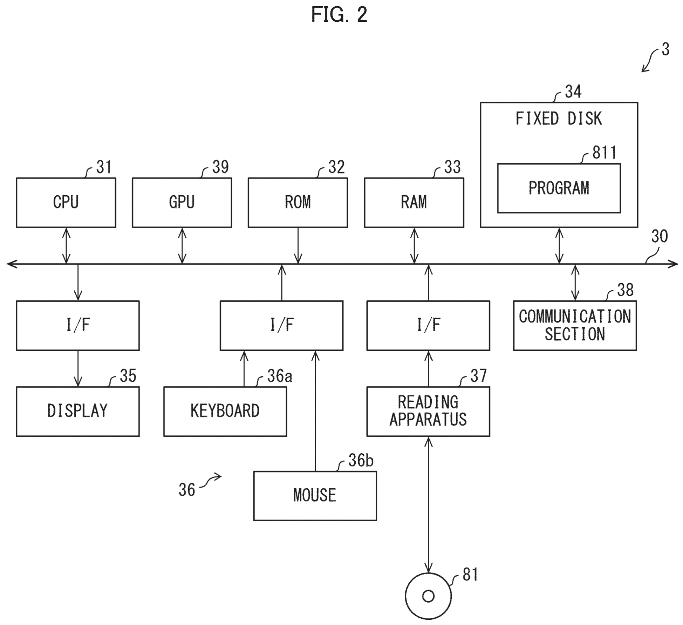

Fig. 2 is a view illustrating an example configuration of the computer 3 that is included in the defect inspection apparatus 1 illustrated in Fig. 1. The computer 3 has a general computer system configuration including a CPU 31, a ROM 32, a RAM 33, a fixed disk 34, a display 35, an input section 36, a reading apparatus 37, a communication section 38, a GPU 39, and a bus 30.

The CPU 31 carries out various types of arithmetic processing. The GPU 39 carries out various types of arithmetic processing pertaining to image processing. The ROM 32 stores a basic program. The RAM 33 and the fixed disk 34 store various types of information. The display 35 is an example display section and displays various types of information such as an image. The input section 36 includes a keyboard 36a and a mouse 36b that receive input from a user. The reading apparatus 37 reads information from a computer-readable recording medium 81 such as an optical disk, a magnetic disk, a magneto-optical disk, or a memory card.

The display 35, the keyboard 36a, the mouse 36b, and the reading apparatus 37 are each connected to the bus 30 via an interface I/F. The communication section 38 transmits and receives signals to and from another configuration of the defect inspection apparatus 1 and an external apparatus. The bus 30 is a signal circuit that connects the CPU 31, the GPU 39, the ROM 32, the RAM 33, the fixed disk 34, the display 35, the input section 36, the reading apparatus 37, and the communication section 38.

In the computer 3, the program 811 is, in advance, read from the recording medium 81 via the reading apparatus 37 and stored on the fixed disk 34. The program 811 may be stored on the fixed disk 34 via a network. The CPU 31 and the GPU 39 execute arithmetic processing in accordance with the program 811 while using the RAM 33 and the fixed disk 34. The CPU 31 and the GPU 39 function as the operation section in the computer 3. Another configuration that is different from the CPU 31 and the GPU 39 and that functions as the operation section may be employed.

### (Functional configuration)

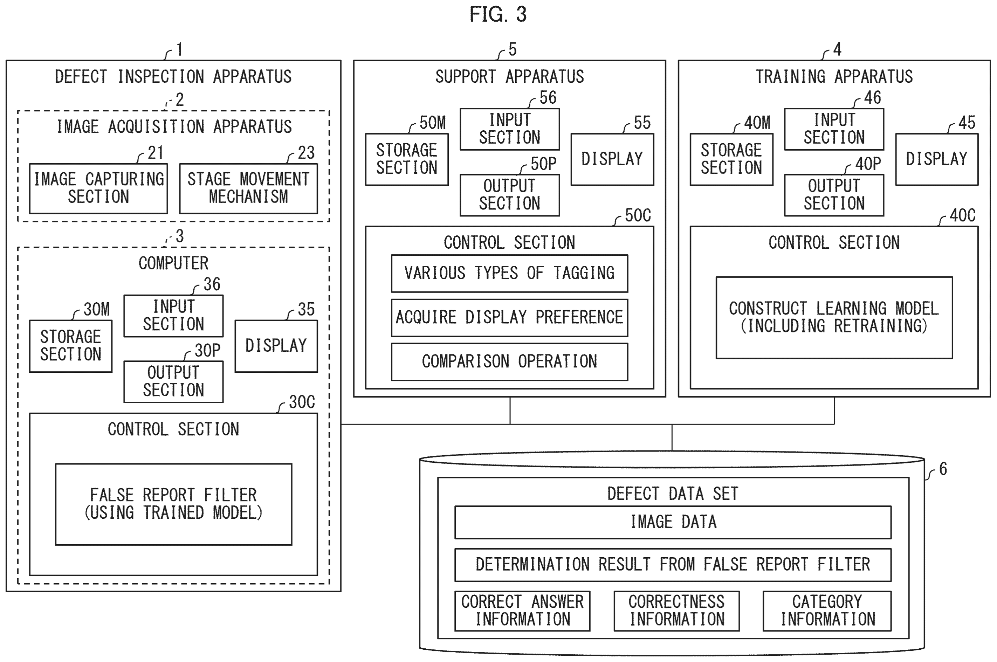

Fig. 3 is a block diagram illustrating an example configuration of the defect inspection apparatus 1, the training apparatus 4, the support apparatus 5, and a server 6 in an embodiment of the present disclosure. Fig. 3 illustrates functional configurations realized by the computer 3 carrying out arithmetic processing or the like in accordance with the program 811. These functional configurations include a control section 30C, a storage section 30M, and an output section 30P. At least some of these functional configurations may be realized by a dedicated electric circuit. These functional configurations may also be realized by a plurality of computers.

Among the functional configurations illustrated in Fig. 3, the control section 30C and the output section 30P are realized by the CPU 31, the GPU 39, the ROM 32, the RAM 33, the fixed disk 34, and peripheral configurations of these. The CPU 31 and the GPU 39 are each an example processor. The storage section 30M is realized mainly by the RAM 33 and the fixed disk 34. The RAM 33 and the fixed disk 34 are each an example memory.

The storage section 30M stores, for example, an image acquired by the image capturing section 21, and various items of information pertaining to an inspection of the substrate 9. The control section 30C controls operation of the image capturing section 21, the stage movement mechanism 23, and each of the functional configurations. The output section 30P outputs a result of processing by the control section 30C.

### (Training apparatus)

The training apparatus 4 is an apparatus that executes machine learning. Machine learning is carried out, for example, by deep learning with use of a neural network. The machine learning may be carried out by a method other than deep learning. The training apparatus 4 includes a computer similar to the computer 3 illustrated in Fig. 2. The training apparatus 4 includes a display 45, an input section 46, a control section 40C, a storage section 40M, and an output section 40P.

The input section 46 is similar to the input section 36, and the display 45 is similar to the display 35. The control section 40C is similar to the control section 30C, the storage section 40M is similar to the storage section 30M, and the output section 40P is similar to the output section 30P.

### (Support apparatus)

The support apparatus 5 is an apparatus for supporting retraining of a trained model constructed in a false report filter (described later). The support apparatus 5 includes a computer similar to the computer 3 illustrated in Fig. 2. The support apparatus 5 includes a display 55, an input section 56, a control section 50C, a storage section 50M, and an output section 50P.

The input section 56 is similar to the input section 36, and the display 55 is similar to the display 35. The control section 50C is similar to the control section 30C, the storage section 50M is similar to the storage section 30M, and the output section 50P is similar to the output section 30P.

### (Server)

The server 6 stores a defect data set (described later). The defect inspection apparatus 1, the training apparatus 4, the support apparatus 5, and the server 6 are connected by a network so as to be able to communicate with each other. A place in which the defect data set is stored is not limited to the server 6, but may be the storage section 30M, the storage section 40M, or the storage section 50M.

### (Training phase)

In the training apparatus 4, the storage section 40M stores a defect image prepared in advance by the user. The control section 40C uses the input section 46 to receive input of whether the defect image stored in the storage section 40M is a false report or a defect. The control section 40C generates, on the basis of the input received by the input section 46, training data in which a false report or a correct answer is labeled to the defect image.

The control section 40C constructs a learning model by using the generated training data to carry out machine learning. The output section 40P loads, in the defect inspection apparatus 1, a trained model constructed by the control section 40C. That is, the output section 40P provides the trained model to the defect inspection apparatus 1. The control section 30C of the defect inspection apparatus 1 constructs, in a false report filter, the trained model provided by the training apparatus 4. The false report filter, which is a function realized by the control section 30C, determines appropriateness of defect determination for an image that has been determined by the defect inspection apparatus 1 to have a defect, and filters a false report.

### (Test phase)

In the defect inspection apparatus 1, the control section 30C acquires, from the storage section 30M, an image captured by the image capturing section 21. By carrying out image processing with respect to the image captured by the image capturing section 21, the control section 30C determines whether a component formed on the substrate 9 is a non-defective product or a defect.

The false report filter in which the trained model provided by the training apparatus 4 is constructed determines whether an image which has been determined by the control section 30C to be defective is defective or false. The control section 30C generates a defect data set by tagging a determination result from the false report filter to each of a plurality of sets of image data that have been determined to be defective.

The output section 30P provides the server 6 with the defect data set generated by the control section 30C. The server 6 stores the defect data set provided by the defect inspection apparatus 1. The output section 30P may store the defect data set in the storage section 30M or may provide the defect data set to the training apparatus 4 or the support apparatus 5. The defect data set includes (i) the plurality of sets of image data that have been determined by the control section 30C to be defective and (ii) the determination result from the false report filter.

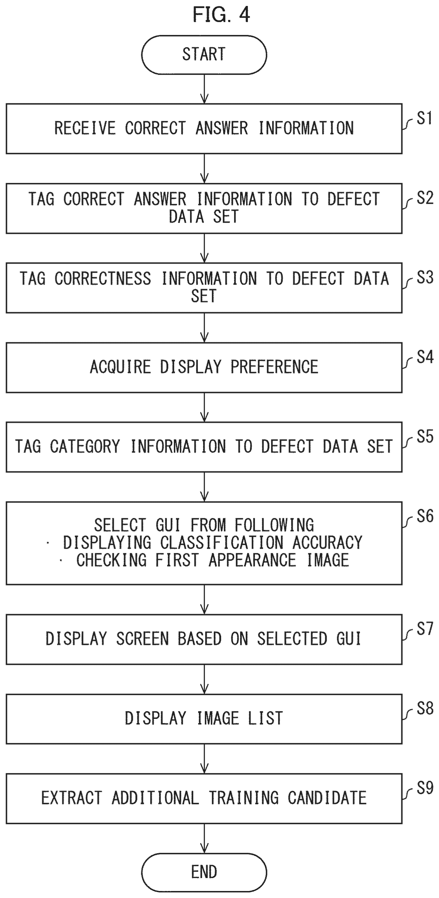

Fig. 4 is a flowchart illustrating an example process carried out by the support apparatus 5 illustrated in Fig. 3. The following description of the process illustrated in Fig. 4 also serves as a description of a support method for supporting retraining of a trained model. The control section 50C included in the support apparatus 5 carries out, in conjunction with the storage section 50M, the process in steps S1 to S9 illustrated in Fig. 4. The control section 50C carries out the process in steps S1 to S9 by, for example, executing a program that is stored on a fixed disk included in the support apparatus 5. This program is an example support program.

First, for an image that has been determined by the defect inspection apparatus 1 to have a defect, the control section 50C uses the input section 56 to receive, as correct answer information, input of an assessment result from an inspector which assessment result is related to whether the defect falls under a false report (S1).

Specifically, the control section 50C refers to the defect data set from the server 6 and displays, on the display 55, an image which has been determined by the control section 30C to have a defect. In so doing, the control section 50C also displays, on the display 55, the determination result from the false report filter which determination result is tagged to image data. By checking the image and the determination result from the false report filter, the image and the determination result each being displayed on the display 55, the inspector uses the input section 56 to input an assessment result regarding whether the defect falls under a false report.

After receiving the correct answer information, the control section 50C tags the correct answer information to the defect data set in which the determination result from the false report filter is tagged to each of a plurality of sets of image data that have been determined by the defect inspection apparatus 1 to have a defect (S2). The correct answer information being tagged to the defect data set causes the defect data set stored in the server 6 to include the correct answer information.

After tagging the correct answer information to the defect data set, the control section 50C obtains correctness information indicating whether the determination result from the false report filter falls under a correct answer or an incorrect answer, and tags the correctness information to the defect data set (S3). Specifically, the control section 50C obtains the correctness information by performing a comparison operation between the determination result from the false report filter and the correct answer information.

In so doing, in a case where the determination result from the false report filter matches an assessment result indicated by the correct answer information, the control section 50C obtains the correctness information indicating that the determination result from the false report filter is correct. In contrast, in a case where the determination result from the false report filter does not match the assessment result indicated by the correct answer information, the control section 50C obtains the correctness information indicating that the determination result from the false report filter is incorrect. The correctness information being tagged to the defect data set causes the defect data set stored in the server 6 to include the correctness information.

After tagging the correctness information to the defect data set, the control section 50C acquires, as a display preference, display control information for controlling display content on the display 55 (S4). Specifically, the control section 50C uses the input section 56 to receive input of condition specification related to display content on the display 55.

Examples of the condition specification received by the control section 50C include a wafer unit, a lot unit, a date unit, a device unit, an equipment unit, and a user. That is, in the condition specification, on what criterion display is performed on the display 55 is specified. The control section 50C receiving the condition specification determines the display control information, and the control section 50C can obtain the display preference.

After acquiring the display preference, the control section 50C obtains category information for classifying the defect data set into a plurality of categories, and tags the category information to the defect data set (S5). Specifically, the control section 50C uses an operation in accordance with specification of the display preference acquired in step S4 to obtain the category information for classifying, into a plurality of categories, the defect data set to which at least the correct answer information and the correctness information are tagged.

The category information is information for classifying the image data to which the "false report" is tagged as the determination result from the false report filter into one of at least the following (category 1) to (category 3):
(category 1) a first appearance image that is an image including a defect which is inferred to have scarcely occurred in the past;
(category 2) an erroneous determination that is an image in which a defect that should be assessed as a defect which is not a false report is overlooked; and
(category 3) a correct answer that is an image including a defect which is determined as a false report without any problem.

The category information is information for classifying the image data to which the "defect that is not the false report" is tagged as the determination result from the false report filter into one of at least the following (category 1) to (category 3):
(category 1) a first appearance image that is an image including a defect which is inferred to have scarcely occurred in the past;
(category 2) an erroneous determination that is an image including a defect which should be assessed as a false report; and
(category 3) a correct answer that is an image including a defect which does not fall under a false report.

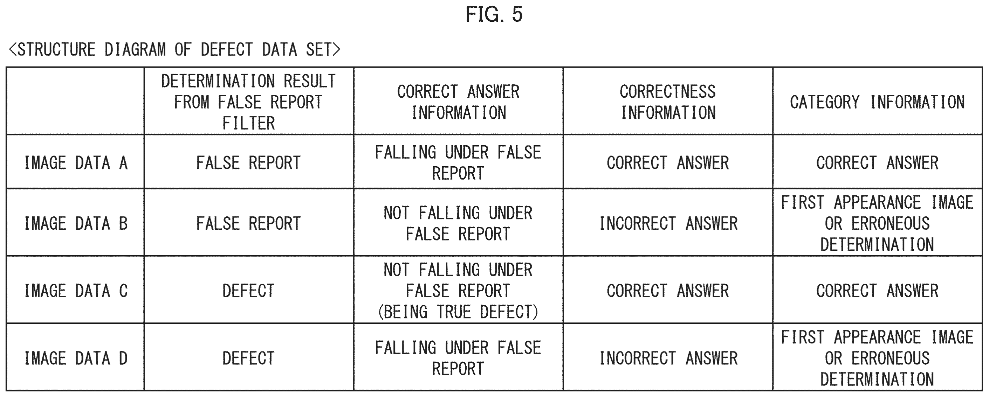

The category information being tagged to the defect data set causes the defect data set stored in the server 6 to include the category information. A structure diagram of the defect data set is, for example, a diagram illustrated in Fig. 5. Fig. 5 is an example structure diagram of a defect data set.

As illustrated in Fig. 5, in the defect data set, the determination result from the false report filter, the correct answer information, the correctness information, and the category information are associated with each other for each set of image data. The determination result from the false report filter indicates either a false report or a defect regarding the each set of image data, and the correct answer information indicates, regarding the each set of image data, whether a defect falls under or does not fall under a false report. The correctness information indicates either a correct answer or an incorrect answer, and the category information indicates any of a first appearance image, an erroneous determination, and a correct answer.

After tagging the category information to the defect data set, the control section 50C receives a selection from "displaying classification accuracy" and "checking first appearance image" regarding a graphical user interface (GUI) (S6). Specifically, the control section 50C displays, on the display 55, "displaying classification accuracy" and "checking first appearance image" as the GUI. The control section 50C uses the input section 56 to receive the selection of the GUI.

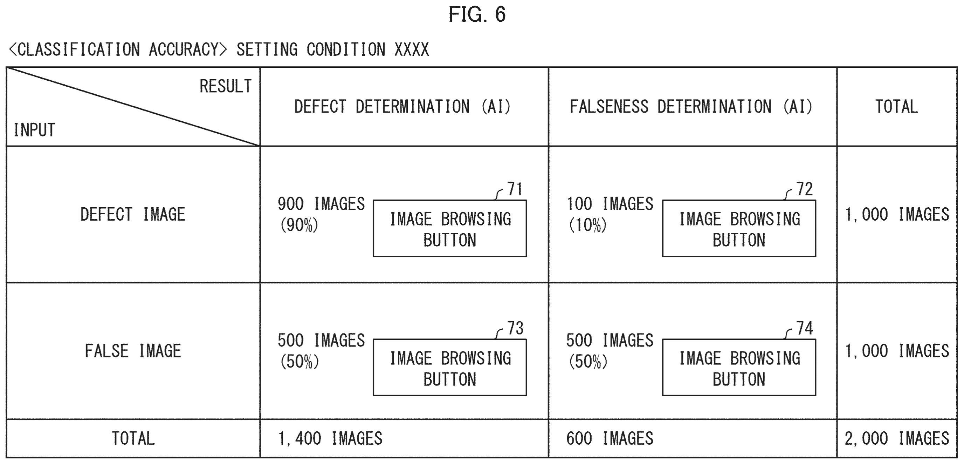

The control section 50C displays, on the display 55, a screen based on the selected GUI (S7). In a case where "displaying classification accuracy" is selected, the control section 50C displays, on the display 55, a screen showing classification accuracy, as illustrated in Fig. 6. In so doing, the control section 50C displays the defect data set on the display 55 on the basis of specification of the display preference and at least one of the correct answer information, the correctness information, and the category information that are tagged to the defect data set.

Fig. 6 is a view illustrating an example screen showing classification accuracy. In Fig. 6, a setting condition for displaying classification accuracy is a condition corresponding to condition specification for the display preference. The first column indicates whether an image input to the defect data set is a defect image or a false image. Note here that the defect image is an image which has been determined by the defect inspection apparatus 1 to have a defect and in which the correct answer information is information indicating that the defect does not fall under the false report. The false image is an image which has been determined by the defect inspection apparatus 1 to have a defect and in which the correct answer information is information indicating that the defect falls under the false report.

The second column indicates (i) the number of images that have been determined by the false report filter to be defective and (ii) a ratio of images in which the determination result from the false report filter falls under the correct answer in the correctness information to input images. The third column indicates (i) the number of images that have been determined by the false report filter to fall under the correct answer and (ii) a ratio of images in which the determination result from the false report filter falls under the correct answer in the correctness information to input images. The fourth column indicates the number of input defect images and the number of input false images.

In Fig. 6, among 1,000 input defect images, 900 defect images have been determined to be defective, and 100 defect images have been determined to be false. Among 1,000 input false images, 500 false images have been determined to be defective, and 500 false images have been determined to be false. In addition, the total number of input defect images and input false images is 2,000, and among the 2,000 images, 1,400 images have been determined to be defective, and 600 images have been determined to be false.

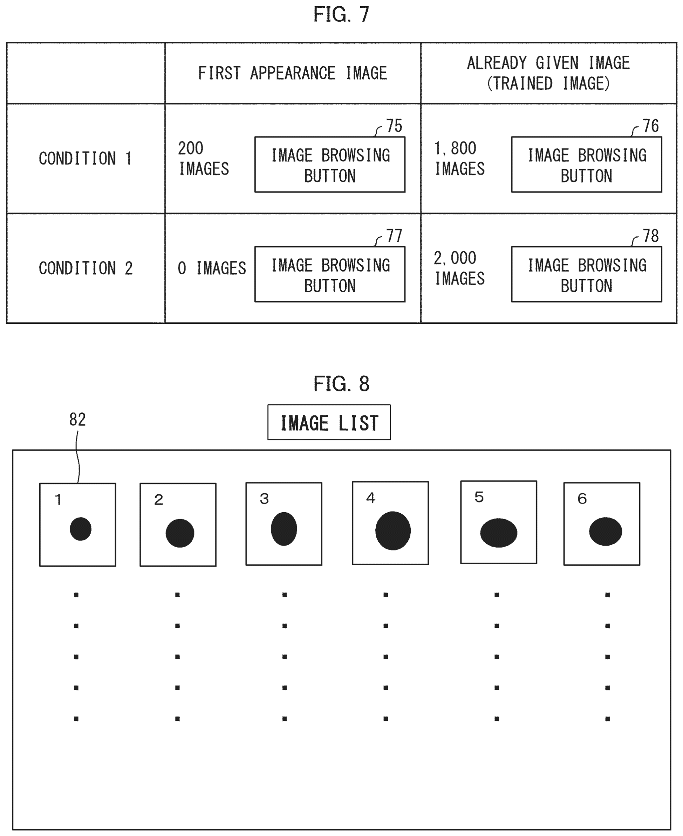

In contrast, in a case where "checking first appearance image" is selected, the control section 50C displays, on the display 55, a screen showing information pertaining to a first appearance image and an already given image, as illustrated in Fig. 7. The already given image is an image that has been trained in a trained model and that is classified into the (category 2) or the (category 3) in the category information.

Fig. 7 is a view illustrating an example screen showing information pertaining to a first appearance image and an already given image. In Fig. 7, the first column indicates a condition specified by the display preference, the second column indicates the number of first appearance images, and the third column indicates the number of already given images. The second row indicates the number of images falling under a condition 1, and the third row indicates the number of images falling under a condition 2.

The conditions 1 and 2 are conditions corresponding to the condition specification for the display preference, and are set as below so that, for example, users, lots, dates, devices, and pieces of equipment are distinguished from each other.
· condition 1: user A, condition 2: user B
· condition 1: lot A, condition 2: lot B
· condition 1: DD/MM, condition 2: DD/MM
· condition 1: device A, condition 2: device B
· condition 1: unit 1, condition 2: unit 2

In step S7, the control section 50C displays, on the display 55, a plurality of categories obtained by classification by the category information, as illustrated in Figs. 6 and 7. The control section 50C may receive, as user specification, a category specified by the user, among the plurality of categories displayed on the display 55. The control section 50C uses, for example, the input section 56, to receive the user specification.

After displaying, on the display 55, the screen based on the selected GUI, the control section 50C displays an image list on the display 55 (S8). Assume here that the control section 50C displays, on the display 55, a screen showing classification accuracy, as illustrated in Fig. 6.

In this case, for example, upon receiving, with use of the input section 56, the pressing of an image browsing button 71 illustrated in Fig. 6, the control section 50C displays, on the display 55, an image list of 900 defect images that have been determined to be defective, as illustrated in Fig. 8. Fig. 8 is a view illustrating an example image list displayed on the display 55. A plurality of points illustrated in Fig. 8 indicate that a plurality of images 82 are displayed downward one after another.

Similarly, upon receiving the pressing of an image browsing button 72, the control section 50C displays, on the display 55, an image list of 100 defect images that have been determined to be false. Upon receiving the pressing of an image browsing button 73, the control section 50C displays, on the display 55, an image list of 500 false images that have been determined to be defective. Upon receiving the pressing of an image browsing button 74, the control section 50C displays, on the display 55, an image list of 500 false images that have been determined to be false.

In contrast, assume that the control section 50C displays, on the display 55, the screen illustrated in Fig. 7 and showing the information pertaining to a first appearance image and an already given image. Also in this case, similarly, for example, upon receiving, with use of the input section 56, the pressing of an image browsing button 75 illustrated in Fig. 7, the control section 50C displays, on the display 55, an image list of 200 first appearance images falling under the condition 1, as illustrated in Fig. 8.

Similarly, upon receiving the pressing of an image browsing button 76, the control section 50C displays, on the display 55, an image list of 1,800 already given images falling under the condition 1. When the control section 50C receives the pressing of an image browsing button 77, no image is displayed in an image list displayed by the control section 50 on the display 55. This is because the number of first appearance images falling under the condition 2 is zero. Upon receiving the pressing of an image browsing button 78, the control section 50C displays, on the display 55, an image list of 2,000 already given images falling under the condition 2.

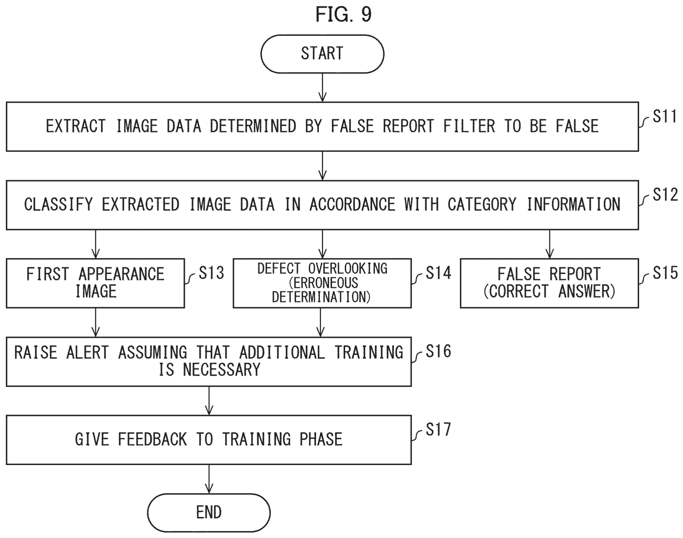

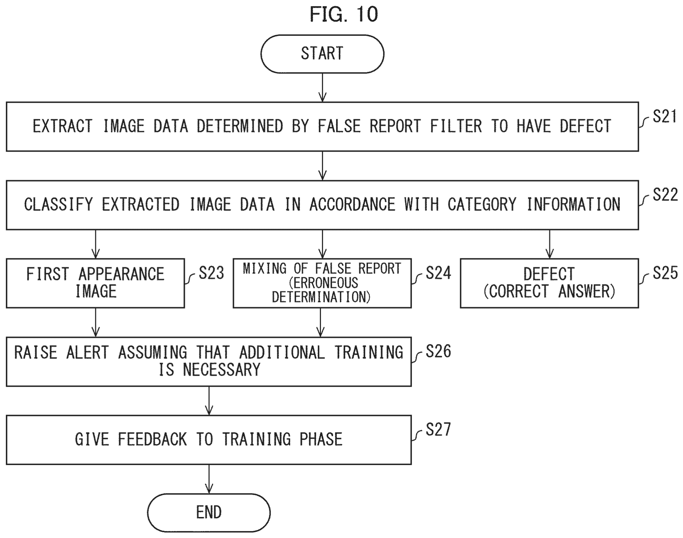

After displaying the image list on the display 55, the control section 50C extracts an additional training candidate (S9). Specifically, the control section 50C carries out processes illustrated in Figs. 9 and 10. Fig. 9 is a flowchart illustrating an example process in which the support apparatus 5 illustrated in Fig. 3 extracts an additional training candidate with respect to image data that has been determined by a false report filter to be false. Fig. 10 is a flowchart illustrating an example process in which the support apparatus 5 illustrated in Fig. 3 extracts an additional training candidate with respect to image data that has been determined by a false report filter to have a defect.

As illustrated in Fig. 9, on the basis of the user specification received in step S7, the control section 50C extracts, from the defect data set, the image data that has been determined by the false report filter to be false (S11). After extracting the image data, the control section 50C classifies the extracted image data in accordance with the category information (S12). For example, in a case where the category information that is tagged to the image data is information for classifying the image data as the (category 1), the control section 50C classifies the extracted image data as a first appearance image (S13).

In a case where the category information that is tagged to the image data is information for classifying the image data as the (category 2), the control section 50C classifies the extracted image data as defect overlooking (erroneous determination) (S14). In a case where the category information that is tagged to the image data is information for classifying the image data as the (category 3), the control section 50C classifies the extracted image data as a false report (correct answer) (S15).

After step S13 or S14, the control section 50C raises an alert assuming that additional training is necessary (S16). That is, the control section 50C raises an alert in a case where the category information indicating the (category 1) or the (category 2) is tagged to the defect data set. Specifically, the control section 50C may, for example, display the alert on the display 55. Thus, by checking the display 55, the user can recognize that additional training of the image data is necessary.

After the control section 50C raises the alert, the output section 50P gives feedback to the training phase (S17). Specifically, the output section 50P provides the training apparatus 4 with the image data to which the category information indicating the (category 1) or the (category 2) is tagged.

In the training apparatus 4, the storage section 40M stores the image data which is provided by the support apparatus 5 and to which the category information indicating the (category 1) or the (category 2) is tagged. The control section 40C uses the image data stored in the storage section 40M to retrain the trained model. The output section 40P provides the defect inspection apparatus 1 with the trained model that has been retrained by the control section 40C. The control section 30C of the defect inspection apparatus 1 reconstructs, in the false report filter, the trained model that has been provided by the training apparatus 4.

In contrast, as illustrated in Fig. 10, on the basis of the user specification received in step S7, the control section 50C extracts, from the defect data set, the image data that has been determined by the false report filter to have a defect (S21). After extracting the image data, the control section 50C classifies the extracted image data in accordance with the category information (S22). For example, in a case where the category information that is tagged to the image data is information for classifying the image data as the (category 1), the control section 50C classifies the extracted image data as a first appearance image (S23).

In a case where the category information that is tagged to the image data is information for classifying the image data as the (category 2), the control section 50C classifies the extracted image data as mixing of a false report (erroneous determination) (S24). Mixing of a false report means that a defect which should be assessed as a false report is included. In a case where the category information that is tagged to the image data is information for classifying the image data as the (category 3), the control section 50C classifies the extracted image data as a defect (correct answer) (S25).

After step S23 or S24, the control section 50C raises an alert assuming that additional training is necessary (S26). The process in step S26 is similar to the process in step S16. After the control section 50C raises the alert, the output section 50P gives feedback to the training phase (S27). The process in step S27 is similar to the process in step S17.

In step S9, in conjunction with the storage section 50M, the control section 50C carries out a process for, on the basis of the user specification received in step S7, extracting, from the defect data set, the image data that is used for retraining of the trained model.

As a result of the above, the user can appropriately select data that is used for retraining of the trained model by the training apparatus 4. Thus, it is possible to efficiently optimize the trained model.

### (Variation 1)

In the defect inspection apparatus 1, prior to determination by the false report filter, the control section 30C may generate a defect data set including a plurality of sets of image data that have been determined to be defective. The output section 30P provides the server 6 with the defect data set generated by the control section 30C. The server 6 stores the defect data set provided by the defect inspection apparatus 1. The output section 30P may store the defect data set in the storage section 30M or may provide the defect data set to the training apparatus 4 or the support apparatus 5.

In the support apparatus 5, for an image that has been determined by the defect inspection apparatus 1 to have a defect, the control section 50C uses the input section 56 to receive, as correct answer information, input of an assessment result from an inspector which assessment result is related to whether the defect falls under a false report.

Specifically, the control section 50C refers to the defect data set from the server 6 and displays, on the display 55, an image which has been determined by the control section 30C to have a defect. By checking the image displayed on the display 55, the inspector can use the input section 56 to input an assessment result regarding whether the defect falls under a false report. After the control section 50C receives the correct answer information, determination by the false report filter is carried out in the defect inspection apparatus 1, and the process carried out by the control section 50C is continued to step S2 and subsequent steps.

### (Variation 2)

In step S7, the control section 50C receives, as the user specification, the category specified by the user, among the plurality of categories displayed on the display 55. Note, however, that, instead of this process, for example, prior to the process in step S1, the control section 50C may receive, as the user specification, a category specified by the user in advance, among the plurality of categories. The control section 50C uses, for example, the input section 56 to receive the user specification in advance.

In step S9, in conjunction with the storage section 50M, the control section 50C carries out a process for, on the basis of the user specification received in advance, extracting, from the defect data set, the image data that is used for retraining of the trained model.

Aspects of the present invention can also be expressed as follows:
A support apparatus in accordance with an aspect of the present disclosure is a support apparatus for supporting retraining of a trained model constructed in a false report filter that determines appropriateness of defect determination for an image which has been determined by a defect inspection apparatus to have a defect and that filters a false report, the support apparatus including a display section, a memory, and a processor, in conjunction with the memory, the processor carrying out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

The support apparatus in accordance with an aspect of the present disclosure may be configured such that in conjunction with the memory, the processor further carries out g) a process for, on the basis of user specification, extracting, from the defect data set, the image data that is used for retraining of the trained model.

The support apparatus in accordance with an aspect of the present disclosure may be configured such that in conjunction with the memory, the processor further carries out the following processes h) and i):
h) a process for displaying, on the display section, the plurality of categories obtained by classification by the category information; and
i) a process for receiving, as the user specification, a category specified by a user, among the plurality of categories displayed on the display section.

The support apparatus in accordance with an aspect of the present disclosure may be configured such that the category information is information for classifying the image data to which the "false report" is tagged as the determination result from the false report filter into one of at least the following (category 1) to (category 3):
(category 1) a first appearance image that is an image including a defect which is inferred to have scarcely occurred in the past;
(category 2) an erroneous determination that is an image in which a defect that should be assessed as a defect which is not a false report is overlooked; and
(category 3) a correct answer that is an image including a defect which is determined as a false report without any problem.

The support apparatus in accordance with an aspect of the present disclosure may be configured such that the category information is information for classifying the image data to which the "defect that is not the false report" is tagged as the determination result from the false report filter into one of at least the following (category 1) to (category 3):
(category 1) a first appearance image that is an image including a defect which is inferred to have scarcely occurred in the past;
(category 2) an erroneous determination that is an image including a defect which should be assessed as a false report; and
(category 3) a correct answer that is an image including a defect which does not fall under a false report.

The support apparatus in accordance with an aspect of the present disclosure may be configured such that the processor raises an alert in a case where the category information indicating the (category 1) or the (category 2) is tagged to the defect data set.

A support method in accordance with an aspect of the present disclosure is a support method for supporting retraining of a trained model constructed in a false report filter that determines appropriateness of defect determination for an image which has been determined by a defect inspection apparatus to have a defect and that filters a false report, the support method involving using a computer including a display section, a memory, and a processor to cause the processor, in conjunction with the memory, to carry out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

A support program in accordance with an aspect of the present disclosure is a support program for supporting retraining of a trained model constructed in a false report filter that determines appropriateness of defect determination for an image which has been determined by a defect inspection apparatus to have a defect and that filters a false report, wherein the support program being executed by a computer including a display section, a memory, and a processor causes the processor, in conjunction with the memory, to carry out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

### (Additional remarks)

The present disclosure is not limited to the foregoing embodiments, but can be altered by a skilled person in the art within the scope of the claims, and the present disclosure also encompasses, in its technical scope, any embodiment derived by appropriately combining a plurality of technical means disclosed in the embodiments.

### Reference Signs List

1 Defect inspection apparatus
31 CPU
39 CPU
33 RAM
34 Fixed disk
5 Support apparatus
50C Control section
50M Storage section
55 Display

## Claims

1. A support apparatus for supporting retraining of a trained model constructed in a false report filter that determines appropriateness of defect determination for an image which has been determined by a defect inspection apparatus to have a defect and that filters a false report,
the support apparatus comprising a display section, a memory, and a processor,
in conjunction with the memory, the processor carrying out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

2. The support apparatus as set forth in claim 1, wherein
in conjunction with the memory, the processor further carries out g) a process for, on the basis of user specification, extracting, from the defect data set, the image data that is used for retraining of the trained model.

3. The support apparatus as set forth in claim 2, wherein in conjunction with the memory, the processor further carries out the following processes h) and i):
h) a process for displaying, on the display section, the plurality of categories obtained by classification by the category information; and
i) a process for receiving, as the user specification, a category specified by a user, among the plurality of categories displayed on the display section.

4. The support apparatus as set forth in claim 1, wherein the category information is information for classifying the image data to which the "false report" is tagged as the determination result from the false report filter into one of at least the following (category 1) to (category 3):
(category 1) a first appearance image that is an image including a defect which is inferred to have scarcely occurred in the past;
(category 2) an erroneous determination that is an image in which a defect that should be assessed as a defect which is not a false report is overlooked; and
(category 3) a correct answer that is an image including a defect which is determined as a false report without any problem.

5. The support apparatus as set forth in claim 1, wherein the category information is information for classifying the image data to which the "defect that is not the false report" is tagged as the determination result from the false report filter into one of at least the following (category 1) to (category 3):
(category 1) a first appearance image that is an image including a defect which is inferred to have scarcely occurred in the past;
(category 2) an erroneous determination that is an image including a defect which should be assessed as a false report; and
(category 3) a correct answer that is an image including a defect which does not fall under a false report.

6. The support apparatus as set forth in claim 4 or 5, wherein the processor raises an alert in a case where the category information indicating the (category 1) or the (category 2) is tagged to the defect data set.

7. A support method for supporting retraining of a trained model constructed in a false report filter that determines appropriateness of defect determination for an image which has been determined by a defect inspection apparatus to have a defect and that filters a false report,
the support method involving using a computer including a display section, a memory, and a processor to cause the processor, in conjunction with the memory, to carry out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.

8. A support program for supporting retraining of a trained model constructed in a false report filter that determines appropriateness of defect determination for an image which has been determined by a defect inspection apparatus to have a defect and that filters a false report, wherein
the support program being executed by a computer including a display section, a memory, and a processor causes the processor, in conjunction with the memory, to carry out the following processes a) to f):
a) a process for receiving, as correct answer information, input of an assessment result from an inspector which assessment result is related to whether the defect falls under the false report;
b) a process for tagging the correct answer information to a defect data set in which a determination result from the false report filter is tagged to each of a plurality of sets of image data that have been determined by the defect inspection apparatus to have a defect;
c) a process for performing a comparison operation between the determination result from the false report filter and the correct answer information, obtaining correctness information indicating whether the determination result falls under a correct answer or an incorrect answer, and tagging the correctness information to the defect data set;
d) a process for acquiring, as a display preference, display control information for controlling display content on the display section;
e) a process for using an operation in accordance with specification of the display preference to obtain category information for classifying, into a plurality of categories, the defect data set to which at least the correct answer information and the correctness information are tagged, and tagging the category information to the defect data set; and
f) a process for displaying the defect data set on the display section on the basis of the specification of the display preference and at least one of the correct answer information, the correctness information, and the category information that are tagged to the defect data set.
